# EUROPEAN PATENT APPLICATION

(11) **EP 2 991 293 A1**
(43) Date of publication of application: **02.03.2016**
(21) Application number: 14186845.5
(22) Date of filing: 29.09.2014
(51) Int. Cl.: H04L 12/851, H04L 12/861, H04L 29/06, H04L 12/863, H04L 29/08

(54) **Bi-directional data transmission method and electronic devices using the same**

(30) Priority: 26.08.2014 US 201414468354
(71) Applicant: QSAN Technology, Inc., Neihu Dist. Taipei (TW)
(72) Inventor: Hsu, Chin-Hsing, Taipei (TW)
(74) Representative: Becker Kurig Straus

(57) **Abstract**

A bi-directional data transmission method, suitable for an electronic device to exchange data with an external electronic device is provided. The bi-directional data transmission method may include but not limited to the step of: establishing a TCP connection with the external electronic device; buffering a first data stream in a transmitting buffer, wherein the first data stream comprises a plurality of data segments; transmitting the data segments of the first data stream sequentially through the TCP connection to the external electronic device; and determining whether a data request is generated, when the data request is generated, transmitting the data request through the TCP connection prior to any buffered data segment of the first data stream.

## Description

### BACKGROUND OF THE INVENTION

### Field of the Invention

The present invention generally relates to an electronic device, in particular, to an electronic device and data transmission method thereof.

### Description of Related Art

As technologies advance, higher transmission speed over network, such as the Ethernet, is being expected. However, the theoretical maximum network speed is hard to achieve in practical use owing to many reasons. The reasons may include CPU limitation of sender and receiver, resources contentions and protocol overhead over network, etc...

In addition, most of the application protocols are designed based on the TCP protocol because of its the reliability features. In order to provide the said reliability features, the TCP protocol involves lots of flow control mechanisms which may affect the overall application protocol performance. For example, a receiver in TCP protocol only allows the transmitter (e.g., a data provider at the other end of a TCP connection) to transmit as much data segments as the receiver could consume, so as to prevent the discarding of TCP segments. The TCP stack of the transmitter would queue the data segments in a transmitting buffer, and sends the data segments when an acknowledgement (ACK) segments from the receiver are received. As a result, the overall application protocol performance would be affected thereby.

### SUMMARY OF THE INVENTION

Accordingly, the present invention is directed to a bi-directional data transmission method and an electronic device using the same, capable of improving the bi-directional throughput of an application protocol in single TCP connection.

The present invention directs to a bi-directional data transmission method, suitable for an electronic device to exchange data with an external electronic device, and includes at least but not limited to the step of: establishing a TCP connection with the external electronic device; buffering a first data stream in a transmitting buffer, wherein the first data stream comprises a plurality of data segments; transmitting the data segments of the first data stream sequentially through the TCP connection to the external electronic device; and determining whether a data request is generated, when the data request is generated, transmitting the data request through the TCP connection prior to any buffered data segment of the first data stream.

The present invention directs to an electronic device, at least includes a processing unit and a network interface which is coupled to the processing unit. The processing unit is configured for: establishing a TCP connection with an external electronic device through the network interface; buffering a first data stream in a transmitting buffer, wherein the first data stream comprises a plurality of data segments; transmitting the data segments of the first data stream sequentially through the TCP connection to the external electronic device; and determining whether a data request is generated, when the data request is generated, transmitting the data request through the TCP connection prior to any buffered data segments of the first data stream.

In order to make the aforementioned features and advantages of the present disclosure comprehensible, preferred embodiments accompanied with figures are described in detail below. It is to be understood that both the foregoing general description and the following detailed description are exemplary, and are intended to provide further explanation of the invention as claimed.

### BRIEF DESCRIPTION OF THE DRAWINGS

The accompanying drawings are included for a further understanding of the invention, and are incorporated in and constitute a part of this specification. The drawings illustrate embodiments of the invention and, together with the description, serve to explain the principles of the invention.
FIG. 1 illustrates a flow chart of a bi-directional data transmission method, according to an exemplary embodiment of the present invention.
FIG. 2 illustrates a block diagram of an electronic device according to an exemplary embodiment of the present invention.
FIG. 3 illustrates a time flow chart between an iSCSI initiator and an iSCSI target device.
FIG. 4 illustrates a schematic diagram of the insertion about the data request into the transmitting buffer of a TCP connection in an electronic device according to an exemplary embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

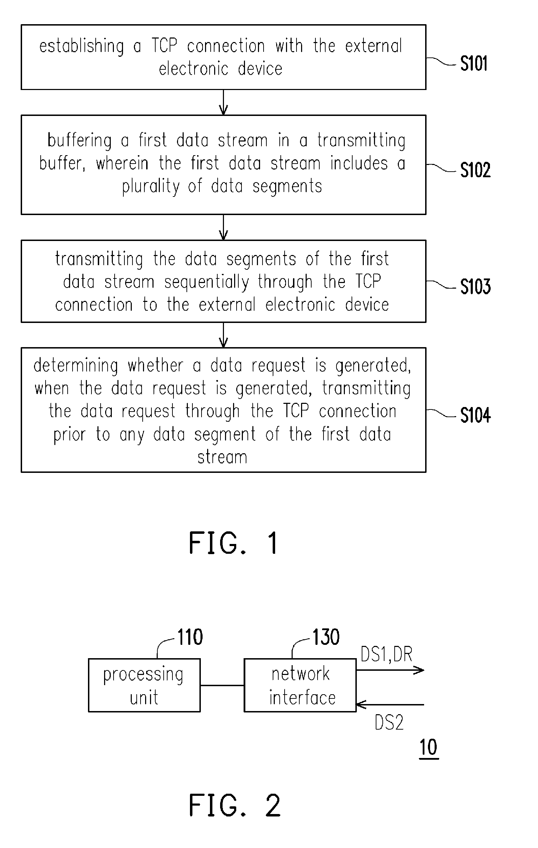

FIG. 1 illustrates a flow chart of a bi-directional data transmission method, according to an exemplary embodiment of the present invention, wherein the bi-directional data transmission method is suitable for an electronic device to exchange data with an external electronic device through network wired or wirelessly. Referring to FIG. 1, first, at step S101, a TCP connection with the external electronic device would be established Next, at step S102, a first data stream would be buffered in a transmitting buffer (e.g., a transmitting buffer of the TCP connection), wherein the first data stream may include a plurality of data segments (i.e., TCP segments). Then, at step S103, the data segments of first data stream would be transmitted through the TCP connection to the external electronic device. And then, at step S104, whether a data request is generated or not would be determined, and when it is determined that the data request is generated, the data request would be transmitted through the TCP connection prior to any buffered data segments of the first data stream.

As a result, a second data stream in response to the data request could be received from the external device and the buffered data segments (i.e., the un-transmitted data segments) of the first data stream could also be transmitted concurrently through the TCP connection.

FIG. 2 illustrates a block diagram of an electronic device according to an exemplary embodiment of the present invention. Referring to FIG. 2, the electronic device would at least include a processing unit 110 and a network interface 130 which is coupled to the processing unit 110. The processing unit 110 would be configured to: establish a TCP connection with an external electronic device (not shown) through the network interface 130; buffer a first data stream in a transmitting buffer, wherein the first data stream may include a plurality of data segments; transmit the data segments of first data stream DS1 to the external electronic device through the TCP connection; determine whether a data request DR is generated, when the data request DR is generated, transmit the data request DR through the TCP connection prior to any buffered data segment of the first data stream DS 1.

The processing unit 110 is configured to process digital signal and to perform procedures related to the proposed method in accordance with exemplary embodiments of the present invention. Also, the processing unit 110 may optionally be coupled to a memory circuit to store programming codes, device configurations, a codebook, buffered or permanent data, and etc... The functions of the processing unit 110 may be implemented using programmable units such as a micro-processor, a micro-controller, a DSP chips, FPGA, etc. The functions of the processing unit 110 may also be implemented with separate electronic devices or ICs, and the processing circuit may also be implemented with either hardware or software. Also, it is noted that the transmitting buffer described above could be a software-implemented buffer configured by the TCP stack (which is operated by the processing unit 110), and one single TCP connection established by the processing unit 110 (or specifically, the TCP stack) may have one transmitting buffer.

In brief, in the present invention, the data request DR that corresponds to the request of data transferring in opposite direction would have higher priority than normal data segments. In practical use, the transmitting buffer of the TCP connection in the processing unit 110 would often be occupied by lots of transmitting data (i.e., the data requested from the other end of the TCP connection, such as the first data stream DS 1 shown in FIG.2) so newly-generated data request DR for requesting data from the opposite direction could not be sent immediately. As a result, there would be no data flow (or only a few) in the opposite direction of the TCP connection (i.e., from the other end of the TCP connection to the electronic device 10) and the bi-directional throughput of the TCP connection would decrease thereby.

For example, some application protocols such as Internet Small Computer System Interface (iSCSI) protocol are designed to allow data (e.g., in form of data segments) to flow in both directions of the TCP connection, and the flow of data in each direction could be controlled by protocol-specific data units communicated between two ends of the TCP connection. In iSCSI protocol, an iSCSI initiator would be allowed to send and receive data with one (or more) iSCSI target device in iSCSI connections simultaneously. The iSCSI initiator uses SCSI Command Protocol Data units (PDUs) to send or receive data to/from the iSCSI target device. The iSCSI initiator could be referred as a client device, such as a personal computer. Also the iSCSI target device could be a device that the iSCSI initiator could access via iSCSI commands over the TCP connection, such as a network storage device or a storage resource located on an iSCSI target

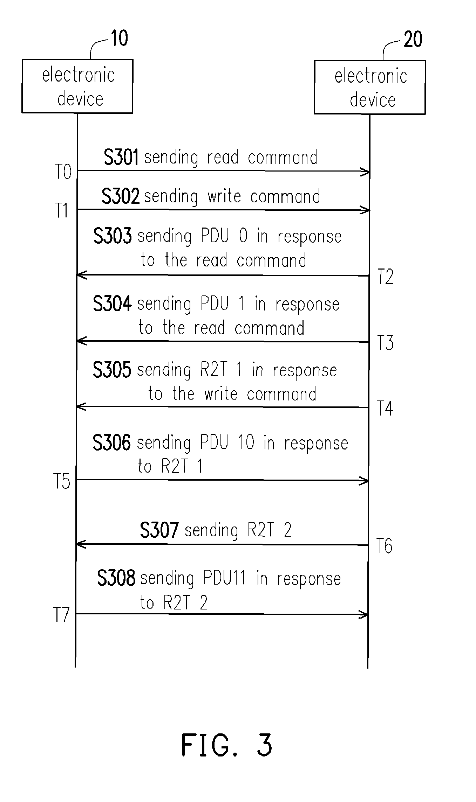

FIG. 3 illustrates a time flow chart between an iSCSI initiator and a iSCSI target device, wherein the electronic device 10 would be the iSCSI initiator , the electronic device 20 would be the iSCSI target device and the a TCP connection has been established between the electronic device 10 and 20. Referring to FIG. 3, respectively at time T0 and T1, the electronic device 10 could send a read command for requesting data from the electronic device 20 (step S301) and a write command for requesting to write data to the electronic device 20 (step S302). Then, after sequentially receiving the read command and the write command from the electronic device 10, the electronic device 20 would sequentially send PDU 0 and PDU 1 respectively at time T2 and T3 (step S303 and S304) in response to the read command that sent at time T0, and then send a first ready to transfer (R2T) command (abbreviated as R2T 1) to electronic device 10 in response to the write command sent at time T1 to notify the electronic device 10 that the electronic device 20 is ready for receiving the writing data (step S305).

After receiving the R2T 1, from the electronic device 20, the electronic device 10 may start to send the writing data PDU 10 in response to R2T 1 at time T5 (step S306). Owing to the limited size of the transmitting buffer of the TCP connection in the electronic device 20 (which would be advertised to the electronic device 10 at the initialization of the TCP connection) or configuration of other flow control mechanisms, the electronic device 10 may need to wait for the second R2T command (R2T 2) from (step S307 at time T6) to send the next writing data PDU 11 to the electronic device (step S308) at time T7.

As depicted in FIG. 3, since the electronic device 20 may sequentially process the command that received from the electronic device 10, the R2T 1 would be stuck in the transmitting buffer of the TCP connection in the electronic device 20 until all the data segments corresponding to the read command (e.g., PDU 0 and PDU 1) are sent, as a result, there wouldn't be any data transmission in opposite direction (from the electronic device 10 to the electronic device 20) between time T2 and T4. When length of the data requested by the iSCSI initiator (e.g., the electronic device 10) is large, such as read commands for requesting kilobytes of data at a time, the time interval without data transmission in opposite direction would be longer, and the bi-directional throughput of the TCP connection between the electronic device 10 and 20 would be decreased thereby.

As a result, in the exemplary embodiment of the present invention, the data request DR would be inserted in a priority order of the transmitting buffer of TCP connection in the electronic device 10 once it is being generated so as to increase the throughput of the TCP connection by keeping both direction of the TCP connection in use. In one embodiment of the present invention, the electronic device 10 shown in FIG. 1 is an iSCSI initiator (could be referred to the electronic device 10 in FIG. 3), and then the data request DR could be referred as a read command. And in another embodiment of the present invention, the electronic device 10 shown in FIG. 1 is an iSCSI target device (could be referred to the electronic device 20 in FIG. 3), then the data request DR could be referred as the R2T command, but the invention is not limited thereto.

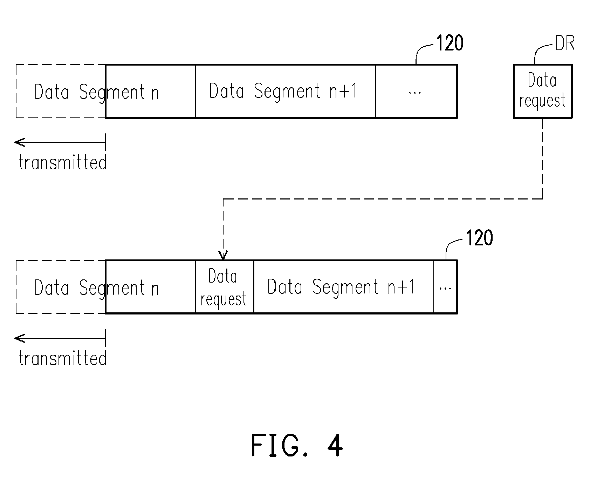

FIG. 4 illustrates a schematic diagram about the insertion of the data request into the transmitting buffer of a TCP connection in an electronic device according to an exemplary embodiment of the present invention. It is noted that, though the transmitting buffer is not depicted in the exemplary embodiment shown in FIG. 1, the transmitting buffer of the TCP connection could be configured in the processing unit 110 in FIG.1. Referring to FIG. 4, the transmitting buffer 120 of the TCP connection would include data segments such as data segment n and n+1 that are ready to be transmitted. And when the data request DR is generated (e.g., a R2T command in response to the write command, or a read command in response to a user's operation), the processing unit 110 would insert the data request DR at the front of the transmitting buffer 120. However, in order to keep integrity of the data segments (or PDUs in iSCSI protocol), the data request DR could only inserted between two data segments. Since part of the data segment n would have been transmitted, the preferable position for the data request DR to insert would the position between data segment n and data segment n+1.

In order to insert the data request DR in a preferable position of the transmitting buffer 120, the processing unit 110 (or be more specific, a protocol stack in the processing unit 110) must be able to identify boundaries of each of the data segment (or PDUs in iSCSI protocol). Also, since part of the data segments would be shifted due to the insertion of the data request DR, the transmitting buffer 120 would need to preserve some buffer space so that data segments won't be discarded because of the insertion of the data request DR. And the sending orders of the buffered data segments (e.g., data segment n+1 and other data segments buffered in the transmitting buffer 120) would better be kept because of dependency or precedence concerns.

For some applications protocols that based on TCP connections, such as the iSCSI protocol, some application fields of the data segments (corresponding to PDUs in iSCSI protocol) would include a sequence number that could be used to represent sequences of commands carried by the data segments or sequence of responses to the other end of the TCP connection. Take iSCSI protocol as an example, the field of 'StatSN' in PDUs could be used to represent the number of responses of SCSI responses, and a sequence number would be increased when a SCSI response is sent. As a result, after the insertion of the data request DR shown in FIG. 4, the processing unit 110 would update the StatSN field of the data request DR to be consecutive with the sequence number in the StatSN field of the data segment n. Also, the sequence number in the StatSN field of rest of the data segments (e.g., segment n+1), would be updated by the processing unit 110 accordingly.

In view of the aforementioned descriptions, the present invention discloses a bi-directional data transmission method and an electronic device using the same, setting higher transmitting priority to the data request which would request data transmission from the opposite transmitting direction, so as to keep both direction of the TCP connection in use, and thereby improving bi-directional throughput of an application protocol over single TCP connection such as the iSCSI protocol. Though embodiments described above are examples applied with iSCSI protocol the concept of the present invention could also be applied to other application protocols that transmit data bi-directionally over TCP connections, such as the Internet Fibre Channel Protocol (iFCP), File Transfer Protocol (FTP), and Network File System (NFS)...etc, the invention is not limited thereto. Also, it is noted that the transmitting buffer mentioned in the present invention would be the transmitting buffer of the TCP connections, and the features disclosed in the present invention are mainly focusing on the use of the transmitting buffer of the TCP connections. However, the processing unit 110 may also include other transmitting buffers for other uses, such as transmitting buffers for application layer processes, some concepts in the present invention could also be applied to those transmitting buffers, and the invention is not limited thereto.

No element, act, or instruction used in the detailed description of disclosed embodiments of the present application should be construed as absolutely critical or essential to the present disclosure unless explicitly described as such. Also, as used herein, each of the indefinite articles "a" and "an" could include more than one item. If only one item is intended, the terms "a single" or similar languages would be used. Furthermore, the terms "any of" followed by a listing of a plurality of items and/or a plurality of categories of items, as used herein, are intended to include "any of', "any combination of', "any multiple of', and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

## Claims

1. A data transmission method, suitable for an electronic device to exchange data with an external electronic device, comprising:
establishing (S101) a TCP connection with the external electronic device (20);
buffering (S102) a first data stream (DS1) in a transmitting buffer (DR), wherein the first data stream (DS1) comprises a plurality of data segments;
transmitting (S103) the data segments of the first data stream (DS1) sequentially through the TCP connection to the external electronic device; and
determining (S104) whether a data request (DR) is generated, when the data request (DR) is generated, transmitting the data request (DR) through the TCP connection prior to any buffered data segment of the first data stream (DS1).

2. The data transmission method according to claim 1, wherein after the step of transmitting the data request (DR) through the TCP connection, the data transmission method further comprises:
receiving, from the external device a second data stream (DS2) in response to the data request (DR) and transmitting the buffered data segments of the first data stream (DS1) concurrently through the TCP connection.

3. The data transmission method according to claim 1, wherein the step of transmitting the data request (DR) through the TCP connection comprises:
updating a sequence number of the data request (DR) according to the transmitted data segments of the first data stream (DS1) before transmitting the data request (DR); and
updating the sequence number of each of the buffered data segments of the first data stream (DS1)accordingly.

4. The data transmission method according to claim 1, wherein:
the electronic device (10, 20) is an Internet Small Computer System Interface (iSCSI) target device, and the external electronic device is an iSCSI initiator; and
the data request (DR) is an iSCSI Ready to Transfer (R2T) command.

5. The data transmission method according to claim 4, before the step of transmitting the data request (DR), the data transmission method further comprises:
receiving a read command from the external electronic device; and
generating the data request (DR) in response to the read command.

6. The data transmission method according to claim 1, wherein:
the electronic device (10) is an iSCSI initiator, and the external electronic device is a iSCSI target device; and
the data request is an iSCSI read command.

7. The data transmission method according to claim 1, wherein:
each of the data segments in the first data stream (DS1)and the second data stream (DS2) is an iSCSI protocol data unit (PDU).

8. An electronic device, comprising:
a processing unit (110); and
a network interface (130), coupled to the processing unit (110),
wherein the processing unit (110) is configured to:
establish a TCP connection with an external electronic device through the network interface (130);
buffer a first data stream (DS1) in a transmitting buffer (120), wherein the first data stream (DS1) comprises a plurality of data segments;
transmit the data segments of the first data stream (DS1) sequentially through the TCP connection to the external electronic device; and
determine whether a data request (DR) is generated, when the data request (DR) is generated, transmit the data request (DR) through the TCP connection prior to any buffered data segment of the first data stream (DS1).

9. The electronic device according to claim 6, wherein:
the processing unit (110) receives from the external device through the network interface (130) a second data stream (DS2) in response to the data request (DR) and transmits the buffered data segments of the first data stream (DR1) concurrently through the TCP connection.

10. The electronic device according to claim 8, wherein:
the processing unit (110) updates a sequence number of the data request (DR) according to the transmitted data segments of the first data stream (DS1) before transmitting the data request (DR); and
the processing unit (110) updates the sequence number of each of the buffered data segments of the first data stream (DS1) accordingly.

11. The electronic device according to claim 8, wherein:
the electronic device (10, 20) is an Internet Small Computer System Interface (iSCSI) target device, and the external electronic device is an iSCSI initiator; and
the data request (DR) is an iSCSI Ready to Transfer (R2T) command.

12. The electronic device according to claim 11, wherein:
the processing unit (110) receives a read command from the external electronic device through the network interface(130); and
the processing unit (110) generates the data request (DR) in response to the read command.

13. The electronic device according to claim 8, wherein:
the electronic device (10) is an iSCSI initiator, and the external electronic device is a iSCSI target device; and
the data request (DR) is an iSCSI read command.

14. The electronic device method according to claim 8, wherein:
each of the data segments in the first data stream (DS1) and the second data stream (DS2) is an iSCSI protocol data unit (PDU).

15. An electronic device, comprising:
a processing unit (110); and
a network interface (130), coupled to the processing unit (110),
wherein the processing unit (110) is configured to:
establish a TCP connection with an iSCSI initiator through the network interface (130);
buffer a first data stream (DS1) in a transmitting buffer (120), wherein the first data stream (DS1) comprises a plurality of data segments;
transmit the data segments of the first data stream (DS1) sequentially through the TCP connection to the external electronic device ; and
determine whether a Ready to Transfer (R2T) command is generated, when the R2T command is generated, transmitting the R2T command through the TCP connection prior to any buffered PDUs of the first data stream (DS1).
